# EUROPÄISCHE PATENTSCHRIFT

(11) **EP 3 081 708 B1**
(45) Veröffentlichungstag und Bekanntmachung des Hinweises auf die Patenterteilung: **02.09.2020**
(21) Anmeldenummer: 15001146.8
(22) Anmeldetag: 18.04.2015
(51) Int. Cl.: E04B 1/41, F16B 37/04

(54) **ANKERSCHIENE ZUR VERANKERUNG IM BETON**
ANCHOR RAIL FOR ANCHORING IN CONCRETE
RAIL D'ANCRAGE DANS LE BÉTON

(43) Veröffentlichungstag der Anmeldung: 19.10.2016
(73) Patentinhaber: HALFEN GmbH, 40764 Langenfeld (DE)
(72) Erfinder: Albartus, Dirk, D-44795 Bochum (DE); Häusler, Frank, D-40217 Düsseldorf (DE); Borgstede, Dirk, D-42799 Leichlingen (DE); Hanke, Andreas, D-42799 Leichlingen (DE)
(74) Vertreter: Reinhardt, Annette

(56) Entgegenhaltungen:
- EP-B1- 2 478 163
- DE-A1- 2 058 420
- DE-A1- 19 725 882
- DE-U1-202009 012 533
- KR-B1- 100 668 112
- US-A- 909 769
- US-A1- 2014 250 825

## Beschreibung

Die vorliegende Erfindung betrifft eine Ankerschiene der im Oberbegriff des Anspruchs 1 angegebenen Gattung.

Eine gattungsgemäße Ankerschiene ist aus der EP 2 478 163 B1 bekannt. Derartige Ankerschienen werden in Beton eingegossen, um dann daran Gegenstände mit Hilfe von Schienenmuttern, Hintergreifteilen, Kopf- oder Hammerkopfschrauben befestigen zu können. Gemeinsam mit solchen Befestigungselementen bildet die Ankerschiene ein Befestigungssystem. Die Gewichtskraft der befestigten Gegenstände wird über die Schienengeometrie und die Anker der Ankerschienene in den Beton übertragen. Dabei können im Beton Risse entstehen. Zur kontrollierten Rissbildung sind in der EP 2 478 163 B1 Rissinitiatormittel an der Ankerschiene vorgesehen.

Aus der DE 2 058 420 A1 ist eine Ankerschiene bekannt, deren Seitenwände über einen Steg miteinander verbunden sind. Die Seitenwände sind dicker als der Steg ausgebildet.

Aus der DE 197 25 882 A1 ist eine Ankerschiene mit Verankerungsprofilen, die den Boden der Ankerschiene überlappen, bekannt. Sowohl die Schenkel als auch die Seitenwände der Ankerschiene sind doppelwandig ausgebildet.

Aus der DE 20 2009 012 533 U1 ist eine Ankerschiene bekannt, deren Anker über einen Niet im Boden der Ankerschiene befestigt ist.

Aus der KR 100 668 112 B1 ist eine Ankerschiene mit einer außenliegenden Bodenverdickung bekannt.

Neben einem möglichen Versagen der Befestigung der Ankerschiene im Beton ist ein Versagen des Materials der Ankerschiene selbst die größte Unsicherheitsquelle für ein ankerschienenbasiertes Befestigungssystem. Unter Belastung durch die Gewichtskraft eines an einer Ankerschiene befestigten Gegenstandes oder durch andere Kräfte ist die Verbindungsstelle von Anker und Schiene der Ankerschiene einer großen Belastung ausgesetzt. Über die Schenkel und die Seitenwände der Ankerschiene wird ein Teil der Gewichtskraft auf den Boden der Ankerschiene übertragen. Dies kann zu einer Deformierung der Ankerschiene führen, wobei typischerweise der Bereich der Verbindung von Anker und Boden durch den im Beton fixierten Anker fixiert ist und die weiter von dieser Verbindungsstelle entfernten Bereiche des Bodens in Richtung vom Anker weg verbogen werden. In einem nächsten Schritt kann der Boden an der Verbindungsstelle zwischen Boden und Anker ausreißen, worunter die Stabilität der gesamten Ankerschiene und ihrer Befestigung leidet. Eine weitere Schwachstelle der Ankerschiene stellen die freien Schenkel der Ankerschiene dar. Typischerweise wird ein großer Teil der Gewichtskraft eines befestigten Gegenstandes über den Kopf einer Kopfschraube auf die freien Schenkel der Ankerschiene übertragen. Hierbei kann es zu einem Aufbiegen der freien Schenkel in Richtung vom Anker der Ankerschiene weg kommen. Im Extremfall werden die freien Schenkel der Ankerschiene so weit aufgebogen, dass der Kopf der Kopfschraube nicht mehr im zwischen den freien Schenkeln in Längsrichtung der Ankerschiene gebildeten Schlitz gehalten werden kann. Auch hierdurch wird die Stabilität der Ankerschiene stark beeinträchtigt.

Aufgabe der Erfindung ist es, eine Ankerschiene bereitzustellen, die im einbetonierten Zustand gegenüber der Belastung durch auf sie wirkende Kräfte sehr stabil ist.

Die Aufgabe wird durch eine Ankerschiene mit den Merkmalen des Anspruchs 1 gelöst.

Hierzu ist vorgesehen, dass die Ankerschiene mindestens eine Verdickung am Grundkörper aufweist. Der Grundkörper der Ankerschiene umfasst zumindest die Seiten wände der Ankerschiene. Auch ein Boden der Ankerschiene ist Teil des Grundkörpers. Die mit den Seitenwänden des Grundkörpers verbundenen freien Schenkel der Ankerschiene sind nicht Teil des Grundkörpers. Die Verdickung ist in einem Bereich des Grundkörpers angeordnet, der bei Befestigung eines Gegenstandes der Ankerschiene durch die Gewichtskraft des befestigten Gegenstandes besonders großen Belastungen ausgesetzt ist. Verdickung bezeichnet hier die Verdickung der Wandstärke in einem Bereich des Grundkörpers der Ankerschiene oder der freien Schenkel der Ankerschiene im Vergleich zu der kleinsten Wandstärke des Grundkörpers und der freien Schenkel. Die Stärke der Verdickung beträgt vorteilhaft zwischen 5% und 100% der kleinsten Wandstärke. Die Wandstärke eines verdickten Bereichs des Grundkörpers oder der Schenkel der Ankerschiene kann also vorteilhaft zwischen 105% und 200% der kleinsten Wandstärke von Grundkörper und Schenkeln der Ankerschiene betragen. Vorteilhaft liegt die Stärke einer Verdickung im Bereich zwischen 10% und 70% der kleinsten Wandstärke. Weiterhin vorteilhaft liegt die Stärke einer Verdickung im Bereich zwischen 20% und 50% der kleinsten Wandstärke.

In einem Querschnitt quer zur Längsrichtung der Ankerschiene durch eine Verdickung variiert die Wandstärke des Grundkörpers und der freien Schenkel der Ankerschiene. Durch diese selektive Verdickung des Grundkörpers oder der freien Schenkel wird die Stabilität der Ankerschiene bei gleichzeitiger Vermeidung von unnötigem Materialverbrauch vergrößert. Da die Ankerschiene vorteilhaft nur an den Stellen verstärkt wird, die üblicherweise großer Belastung ausgesetzt sind, kann im Vergleich zu einer homogenen Verdickung des gesamten Grundkörpers und der freien Schenkel Material eingespart werden. Die Materialeinsparung ist verbunden mit einer Einsparung von Gewicht und Materialkosten.

Es ist vorgesehen, dass die Verdickung am Boden des Grundkörpers der Ankerschiene zumindest im Bereich mindestens eine s Ankers angeordnet und als eine Bodenverdickung ausgebildet ist. Dabei ist der Bereich, in dem die Bodenverdickung angeordnet ist, vorteilhaft mindestens doppelt so groß wie die Kontaktfläche zwischen Anker und Boden der Ankerschiene. Vorteilhaft ist der Anker im Zentrum der Bodenverdickung angeordnet. Bei Befestigung eines Gegenstandes an der Ankerschiene wird ein großer Teil der Gewichtskraft des befestigten Gegenstandes über den Boden und den Anker in den Beton weitergeleitet. Hierbei wird der Anker durch seine Verankerung im Beton gehalten, während der Boden am Anker zieht. Die entsprechenden Zugkräfte werden hierbei an der Verbindungsstelle zwischen Anker und Boden übertragen. Unter großer Belastung durch diese Zugkräfte kann der Boden an der Verbindungsstelle zum Anker ausreißen. Beim Ausreißen entsteht ein Loch im Boden, und Anker und Boden werden voneinander getrennt. Dies führt zu einer starken Verringerung der Stabilität des Befestigungssystems. Wenn mehrere Anker ausreißen, kann sich die gesamte Ankerschiene unter der Gewichtskraft des befestigten Gegenstandes und der Ankerschiene selbst aus dem Beton lösen. Eine Verdickung des Bodens im Bereich des Ankers verstärkt den Boden in dem Bereich, der üblicherweise großen Belastungen ausgesetzt ist, und verringert so das Risiko eines Ausreißens des Bodens im Bereich der Verbindungsstelle zwischen

Anker und Boden. Eine Bodenverdickung im Bereich eines Ankers verbessert die Tragfähigkeit der Ankerschiene. Die Traglast, die maximal von der Ankerschiene getragen werden kann, ist durch eine Bodenverdickung im Bereich eines Ankers größer.

In vorteilhafter Weiterbildung der Erfindung ist vorgesehen, dass sich die Bodenverdickung über die gesamte Längsausdehnung des Bodens erstreckt und dass sich die Bodenverdickung quer zur Längsrichtung der Ankerschiene zumindest über eine Teilbreite des Bodens erstreckt. Die Breite des Bodens wird quer zu seiner Längsrichtung gemessen. Vorteilhaft beträgt die Teilbreite des Bodens, über die sich die Bodenverdickung erstreckt, mindestens 30% der gesamten Breite des Bodens der Ankerschiene. Die Bodenverdickung verläuft vorteilhaft in der Mitte zwischen den beiden Seitenwänden der Ankerschiene. Die Breite der Bodenverdickung beträgt vorteilhaft mindestens das Doppelte der Breite eines Ankers quer zur Längsrichtung des Bodens an der Verbindungsstelle von Anker und Boden. Die Anker sind im Bezug auf die Richtung quer zur Längsrichtung des Bodens in der Mitte des Bodens angeordnet. Da die Anker der Ankerschiene im Bezug auf die Richtung quer zur Längsrichtung der Ankerschiene in der Mitte des Bodens angeordnet sind, werden durch eine Erstreckung der Bodenverdickung über die gesamte Längsausdehnung des Bodens die Verbindungsstellen aller Anker mit dem Boden verstärkt. Neben der bereits beschriebenen Verringerung des Risikos für ein Ausreißen des Bodens im Bereich der Anker unter Belastung durch die Gewichtskraft eines befestigten Gegenstandes ist die Ankerschiene durch eine solche Bodenverdickung auch gegenüber einem Verbiegen des Bodens im Bereich zwischen zwei benachbarten Ankern gestärkt. Eine solche Verbiegung kann insbesondere auftreten, wenn der Haltepunkt - beispielsweise eine Kopfschraube - eines schweren, befestigten Gegenstandes zwischen zwei benachbarten Ankern positioniert ist. Insbesondere dann kann sich die Ankerschiene zwischen den beiden betroffenen benachbarten Ankern aus dem Beton herauslösen und in Richtung von den beiden Ankern weg verbiegen. Das Risiko einer solchen Verbiegung des Bodens der Ankerschiene wird durch eine Bodenverdickung über die gesamte Längsausdehnung des Bodens verringert. Darüber hinaus ist eine Bodenverdickung, die sich über die gesamte Längsausdehnung des Bodens im Bereich der Anker erstreckt, einfacher herzustellen, als Bodenverdickungen, die sich lediglich auf den Bereich der Anker beschränken und in Längsausdehnung des Bodens zwischen den Ankern unterbrochen sind. Eine Bodenverdickung, die sich über die gesamte Längsausdehnung des Bodens erstreckt, kann im Walzverfahren hergestellt werden. Insbesondere kann eine solche Bodenverdickung einer Ankerschiene aus Stahl im Kaltwalzverfahren hergestellt werden. Hierdurch kann eine große Menge an Ankerschienen mit Bodenverdickung in kurzer Zeit auf einfache Weise hergestellt werden.

Bei großem Abstand der Anker zueinander kann es aber auch vorteilhaft sein, dass sich die Bodenverdickung im Bereich eines Ankers über die gesamte Breite des Bodens erstreckt. Hierbei kann die Bodenverdickung in Längsrichtung des Bodens unterbrochen sein. Durch die Unterbrechung der Bodenverdickung in den Bereichen zwischen den Ankern kann Material eingespart werden. So ist die gesamte Ankerschiene leichter und die maximal mögliche Traglast der Ankerschiene bei gleichzeitig geringen Materialkosten größer.

Es kann jedoch auch vorgesehen sein, dass sich die Bodenverdickung über die gesamte Längsausdehnung und die gesamte Breite des Bodens erstreckt. In diesem Fall erstreckt sich die Bodenverdickung über den gesamten Boden. Ein solcher Boden weist bei einfacher Herstellbarkeit eine große Stabilität auf.

In vorteilhafter Weiterbildung der Erfindung ist vorgesehen, dass sich die Bodenverdickung über die gesamte Längsausdehnung und die gesamte Breite des Bodens erstreckt, und dass die Bodenverdickung im Bereich der angeordneten Anker dicker ist als im Bereich des Bodens nahe den Seitenwänden. Außerdem entspricht das Dickenprofil des Bodens quer zur Längsrichtung der Ankerschiene an einer beliebigen Stelle der Ankerschiene dem Dickenprofil der Bodenverdickung quer zur Längsrichtung der Ankerschiene im Bereich des Ankers. Eine solche Ausführung der Ankerschiene sorgt für eine zusätzliche Stabilität im Bereich der Verbindungsstellen von Anker und Boden.

In vorteilhafter Weiterbildung der Erfindung ist vorgesehen, dass die Verdickung an mindestens einer Seitenwand zumindest im Bereich nahe des der Seitenwand zugeordneten freien Schenkels als eine Seitenwandverdickung ausgebildet ist. Die Außenseite des Bodens des U-förmigen Grundkörpers der Ankerschiene bildet eine ebene Ebene. Der größte senkrechte Abstand eines beliebigen Teils des Grundkörpers zu dieser Ebene wird im Folgenden als Höhe der Seitenwand bezeichnet. Die Seitenwandverdickung erstreckt sich zumindest über eine Teilhöhe der Seitenwand. Die Seitenwandverdickung erstreckt sich von der Verbindungsstelle der Seitenwand mit einem der freien Schenkel der Ankerschiene in Richtung des Bodens. Die Seitenwandverdickung erstreckt sich vorteilhaft über einen Bereich von 5% bis 70% der Höhe der Seitenwand. Vorteilhaft erstreckt sich die Seitenverdickung über einen Bereich von 10% bis 60% der Höhe der Seitenwand. Weiterhin vorteilhaft erstreckt sich die Seitenwandverdickung über einen Bereich von 20% bis 60% der Höhe der Seitenwand. Insbesondere erstreckt sich die Seitenwandverdickung über 50% der Höhe der Seitenwand. Da sich die Seitenwandverdickung ausgehend von dem Übergang von einem der freien Schenkel in eine Seitenwand der Ankerschiene erstreckt, ist auch der Übergang selbst verdickt. Dadurch ist der zugehörige freie Schenkel stabiler gegenüber einem möglichen Aufbiegen des Schenkels unter Belastung durch die Gewichtskraft eines an der Ankerschiene befestigten Gegenstands oder durch eine sonstige Kraft. Auch dies führt zu einer verbesserten Tragfähigkeit und zu einer Erhöhung der maximal tolerierbaren Traglast der Ankerschiene. Außerdem führt die beschriebene Seitenwandverdickung zu einer erhöhten Stabilität der Ankerschiene gegenüber Kräften, die mindestens eine vektorielle Komponente ≠ 0 in Richtung quer zur Längsrichtung der Ankerschiene aufweisen. Solche Querkräfte können beispielsweise durch die Gewichtskraft eines an der Ankerschiene befestigten Gegenstandes entstehen oder aber auch durch eine am befestigten Gegenstand angreifende Windkraft. Durch die sich über einen Teil der Höhe der Seitenwand erstreckende Seitenwandverdickung ist die Ankerschiene bei niedrigem Gewicht stabil gegenüber solchen Querkräften und einem Aufbiegen der Schenkel der Ankerschiene.

In vorteilhafter Weiterbildung der Erfindung erstreckt sich die Seitenwandverdickung über die gesamte Höhe der Seitenwand. Eine Seitenwandverdickung, die sich über die gesamte Höhe der Seitenwand erstreckt, erhöht die Stabilität der Ankerschiene gegenüber einem Aufbiegen der Schenkel und gegenüber Kräften, die zumindest teilweise quer zur Längsrichtung der Ankerschiene wirken, weiter. Gleichzeitig ist eine Ankerschiene mit einer Seitenwand, deren Seitenwandverdickung sich über die gesamte Höhe der Seitenwand erstreckt, einfacher herzustellen als eine Ankerschiene mit einer Seitenwand, bei der sich die Seitenwandverdickung nur über einen Teil der Höhe der Seitenwand erstreckt.

In vorteilhafter Weiterbildung der Erfindung ist vorgesehen, dass mindestens ein Schenkel, zumindest im Bereich nahe der dem Schenkel zugeordneten Seitenwand, eine Schenkelverdickung aufweist. Die Stärke der Schenkelverdickung beträgt vorteilhaft zwischen 5% und 100% der kleinsten Wandstärke des unverdickten Schenkels oder eines unverdickten Bereichs des Grundkörpers. Die Wandstärke eines verdickten Bereichs des Schenkels der Ankerschiene kann also vorteilhaft zwischen 105% und 200% der kleinsten Wandstärke der Schenkel oder des Grundkörpers der Ankerschiene betragen. Vorteilhaft liegt die Stärke einer Schenkelverdickung im Bereich zwischen 10% und 70% der kleinsten Wandstärke der Schenkel oder des Grundkörpers. Weiterhin vorteilhaft liegt die Stärke einer Schenkelverdickung im Bereich zwischen 20% und 50% der kleinsten Wandstärke des Schenkels oder des Grundkörpers.

Die Schenkelverdickung erstreckt sich ausgehend von der Verbindungsstelle von einer Seitenwand mit einem der beiden freien Schenkel in Richtung des Schlitzes der Ankerschiene. Die Erstreckung des Schenkels von der Verbindungsstelle von einer Seitenwand bis zum nächstgelegenen Rand des Schlitzes der Ankerschiene wird im Folgenden als Breite eines Schenkels bezeichnet. Vorteilhaft besitzen beide Schenkel die gleiche Breite. Die Schenkelverdickung erstreckt sich zumindest über eine Teilbreite des Schenkels. Die Schenkelverdickung erstreckt sich ausgehend von der Verbindungsstelle von einer Seitenwand und einem Schenkel über einen Bereich von 5% bis 70% der Breite des Schenkels. Vorteilhaft erstreckt sich die Schenkelverdickung über einen Bereich von 10% bis 60% der Breite des Schenkels. Weiterhin vorteilhaft erstreckt sich die Schenkelverdickung über einen Bereich von 20% bis 60% der Breite des Schenkels. Insbesondere erstreckt sich die Schenkelverdickung über 50% der Breite des Schenkels. Auch die Schenkelverdickung hat eine Verstärkung des Bereiches der Verbindungsstelle von dem zugehörigen Schenkel und der zugehörigen Seitenwand zur Folge. Dadurch ist die Stabilität der Ankerschiene gegen ein Aufbiegen der Schenkel unter Belastung durch die Gewichtskraft eines an der Ankerschiene befestigten Gegenstandes oder durch eine sonstige Kraft erhöht. Die Schenkelverdickung vergrößert die von der Ankerschiene maximal tolerierte Traglast.

Vorteilhaft erstreckt sich die Schenkelverdickung über die gesamte Breite des Schenkels. Dies vereinfacht die Herstellung der Ankerschiene und erhöht die Stabilität der Ankerschiene im Vergleich zu einer Schenkelverdickung, die lediglich im Bereich nahe der dem Schenkel zugeordneten Seitenwand ausgeführt ist. Die Stabilität der Ankerschiene ist insbesondere gegenüber einem Aufbiegen der Schenkel unter Belastung durch die Gewichtskraft eines an der Ankerschiene befestigten Gegenstandes verbessert. Aber eine Schenkelverdickung, die sich über die gesamte Breite des Schenkels erstreckt, führt auch zu einer besseren Aufnahme von Kräften, die zumindest teilweise quer zur Längsrichtung der Ankerschiene und quer zur Längsrichtung des Ankers wirken. Eine solche Kraft wird über einen der beiden freien Schenkel auf die zugehörige Seitenwand übertragen. Wenn sich die Schenkelverdickung über die gesamte Breite des Schenkels erstreckt, ist der Schenkel stabiler gegenüber solchen Querkräften und kann sie zuverlässig, ohne deformiert zu werden, an die zugehörige Seitenwand weiterleiten.

In vorteilhafter Weiterbildung der Erfindung weist die Ankerschiene im Bereich mindestens eines Übergangs von der Seitenwand in den der Seitenwand zugeordneten freien Schenkel eine Übergangsverdickung auf. Die Übergangsverdickung erhöht die Stabilität der Ankerschiene gegenüber einem Aufbiegen der freien Schenkel unter der Belastung durch eine an den Schenkeln angreifende Kraft.

Vorteilhaft können alle beschriebenen Verdickungen des Grundkörpers und der Schenkel der Ankerschiene beliebig miteinander kombiniert werden. In vorteilhafter Weiterbildung der Erfindung ist vorgesehen, dass der Grundkörper mehrere Verdickungen aufweist und dass die Dicke aller Verdickungen gleich ist. Dadurch wird die Herstellung der Ankerschiene vereinfacht.

In vorteilhafter Weiterbildung der Erfindung ist vorgesehen, dass die Wandstärke mindestens eines Schenkels von der ihm zugeordneten Seitenwand der Ankerschiene zum Schlitz der Ankerschiene hin zunimmt. Dadurch ist es möglich, dass die dem Anker abgewandte Oberfläche des Schenkels im rechten Winkel zu der ihm zugehörigen Seitenwand orientiert ist und gleichzeitig die dem Anker zugewandte Innenseite des Schenkels mit der zugeordneten Seitenwand einen Winkel < 90° einschließt. Auf diese Weise bildet der Schenkel über seine gesamte Längsausdehnung eine Art Haken. Gleichzeitig kann die dem Anker abgewandte Oberfläche des Schenkels mit dem Beton, in dem die Ankerschiene einbetoniert ist, eine ebene Fläche bilden. Dies sorgt für ein ansprechendes Erscheinungsbild eines nicht mit einem befestigten Gegenstand belegten Bereichs der Ankerschiene und vergrößert die Auflagefläche für einen zu befestigenden Gegenstand. Der mit der Seitenwand verbundene Schenkel weist in einem Querschnitt quer zur Längsrichtung der Ankerschiene ein hakenförmiges Profil auf. Zur Befestigung eines Gegenstandes mit Hilfe der Ankerschiene wird typischerweise eine Kopfschraube in den Schlitz der Ankerschiene eingebracht. Diese Kopfschraube kann insbesondere eine Hammerkopfschraube sein. Vorteilhaft korrespondiert das Profil der eingebrachten Hammerkopfschraube mit dem Profil der innenseitigen Oberfläche des Schenkels. Die Hammerkopfschraube umfasst einen Kopf und einen Gewindeschaft. Die dem Gewindeschaft abgewandte Seite des Kopfes der Hammerkopfschraube ist eben und orthogonal zum Gewindeschaft orientiert. Die dem Gewindeschaft zugewandte Oberfläche des Kopfes der Hammerkopfschraube bildet mit dem Gewindeschaft einen Winkel < 90° und entspricht der Größe des Winkels, den die Seitenwand und die Innenseite des Schenkels einschließen. Beim Befestigen der Hammerkopfschraube zwischen den Schenkeln der Ankerschiene kommen die dem Gewindeschaft zugewandte Oberfläche der Hammerkopfschraube und die innenseitige, dem Anker zugewandte Oberfläche des Schenkels der Ankerschiene bündig aufeinander zu liegen. In einem Querschnitt quer zur Längsachse der Ankerschiene durch die Kopfschraube weist der Kopf der Kopfschraube ein doppelt hakenförmiges Profil auf. Wirkt eine Querkraft auf den parallel zu den Seitenwänden der Ankerschiene orientierten Gewindeschaft quer zur Längsrichtung der Ankerschiene und quer zur Längsrichtung des Ankers, wird der Gewindeschaft nicht nur über seinen Kontakt zu einer Stirnfläche des einen Schenkels in seiner Position gehalten, sondern auch, weil die ihm zugewandte Oberfläche des ihm zugehörigen Kopfes in Kontakt mit dem anderen Schenkel steht. Die an der Kopfschraube angreifende Querkraft wird also, anstatt über nur einen Schenkel, über beide Schenkel in die Ankerschiene geleitet. Dies erhöht die Stabilität des Befestigungssystems gegenüber Kräften, die quer zur Längsrichtung der Ankerschiene und quer zur Längsrichtung des Ankers auf die Kopfschraube wirken.

In einer weiteren vorteilhaften Weiterbildung der Erfindung ist vorgesehen, dass die Schenkel der Ankerschiene und zumindest der an die Schenkel angrenzende Teil der Seitenwände der Ankerschiene orthogonal zueinander orientiert sind. Dabei liegen die dem Anker abgewandten Oberflächen der Schenkel in derselben Ebene. Vorteilhaft sind die Schenkel an den dem Anker abgewandten Enden der Seitenwände angeordnet, so dass die Seitenwände mit den Schenkeln Außenkanten der Ankerschienen bilden. Dadurch kann die Ankerschiene so in Beton eingegossen werden, dass die Oberfläche der Schenkel in einer Ebene mit der Oberfläche des die Ankerschiene umgebenden Betons liegt. So ist ein bündiger Übergang von den Schenkeln der Ankerschiene zu der Betonoberfläche möglich. Dadurch kann die Ankerschiene auf unauffällige und ansprechende Weise in den Beton integriert werden. Dies ist beispielsweise bei der Verwendung von Ankerschienen in Fassaden von Gebäuden sehr vorteilhaft.

Es ist vorgesehen, dass die Seitenwände senkrecht in Bezug auf den Boden angeordnet sind. Die Seitenwände bilden mit dem Boden Außenkanten. Die beiden Seitenwände verlaufen parallel zueinander. Die freien Schenkel sind vorteilhaft auf gleicher Höhe an dem dem Boden abgewandten Bereich der Seitenwände senkrecht zu den Seitenwänden angeordnet. Die freien Schenkel können jedoch auch in einem anderen Winkel zu den Seitenwänden orientiert sein. Durch die senkrechte Orientierung der Seitenwände zum Boden können quer zur Längsrichtung der Ankerschiene auftretende Kräfte effizient über die senkrechten Seitenwände in den Beton abgeleitet werden. Hierbei werden die auftretenden Kräfte zunächst über die Kopfschraube und/oder die freien Schenkel auf die Seitenwände übertragen. Die senkrechte Orientierung der Seitenwände zum Boden ermöglicht weiterhin die Aufnahme von typischen Kopfschrauben in die Ankerschiene. Insbesondere ist die Querschnittsgeometrie einer so gefertigten Ankerschiene optimal auf den entsprechenden Querschnitt einer Hammerkopfschraube abgestimmt.

Vorteilhaft ist die Ankerschiene einteilig aus kaltgewalztem Stahl gefertigt. Dies trägt zu einer größeren Stabilität der Ankerschiene bei. Die erhöhte Festigkeit der Ankerschiene sorgt für eine Erhöhung der maximal tragbaren Traglast durch die Ankerschiene. Durch die erhöhte Festigkeit der Ankerschiene ist die Ankerschiene gegenüber einem Verbiegen der Ankerschiene bei Belastung durch beispielsweise die Gewichtskraft eines befestigten Gegenstandes stabiler. Darüber hinaus ist eine Herstellung im Kaltwalzverfahren deutlich kostengünstiger und energiesparender als die Herstellung im Warmwalzverfahren. Auf diese Weise kann unter Einsatz einer kleineren Energiemenge eine stabilere Ankerschiene hergestellt werden.

Vorteilhaft weist die Ankerschiene zur Verankerung im Beton einen im Wesentlichen C-förmigen Querschnitt auf, wobei die Ankerschiene einen im Querschnitt im Wesentlichen U-förmigen Grundkörper, zwei freie Schenkel und mindestens einen Anker umfasst, wobei die zwei freien Schenkel gegenüberliegend zum Anker am Grundkörper angeordnet sind, wobei zwischen den freien Schenkeln ein Schlitz in Längsrichtung der Ankerschiene gebildet ist. Vorteilhaft ist die Ankerschiene dadurch gekennzeichnet, dass der Grundkörper an seiner dem Beton zugewandten Außenseite zumindest teilweise eine Profilierung aufweist.

Vorteilhaft weist die Ankerschiene zur Verankerung im Beton einen im Wesentlichen C-förmigen Querschnitt auf, wobei die Ankerschiene mindestens einen Anker, zwei Seitenwände und zwei gegenüberliegende freie Schenkel umfasst, wobei zwischen den freien Schenkeln ein Schlitz in Längsrichtung der Ankerschiene gebildet ist. Vorteilhaft ist die Ankerschiene dadurch gekennzeichnet, dass die freien Schenkel an ihrer dem Anker abgewandten Seite, und somit auf der vorderen Außenseite der Ankerschiene bezogen auf die Längserstreckung eine zumindest partielle Verzahnung besitzen.

Vorteilhaft kann die Ankerschiene als Teil eines Befestigungssystems zur Sicherung einer Kopfschraube innerhalb der im Beton zu befestigenden Ankerschiene genutzt werden. Vorteilhaft ist das Befestigungssystem dadurch gekennzeichnet, dass eine Rastungsplatte vorgesehen ist, die eine Verzahnung aufweist, dass die Rastungsplatte zwischen einem zu befestigenden Gegenstand und den freien Schenkeln der Ankerschiene angeordnet ist, und dass die Verzahnung der Rastungsplatte in Richtung der freien Schenkel der Ankerschiene zeigt und beim Befestigen des Gegenstands mit Hilfe einer Befestigungsmutter in die Verzahnung der Schenkel eingreift.

Ausführungsbeispiele der Erfindung werden im Folgenden anhand der Zeichnung erläutert. Es zeigen:
- Fig. 1: eine perspektivische Darstellung einer Ankerschiene,
- Fig. 2: eine Ansicht der Ankerschiene aus Fig. 1 in Richtung des Pfeils II in Fig. 1,
- Fig. 3: eine schematische Ansicht einer nicht erfindungsgemäßen Ankerschiene von einem Längsende aus in Längsrichtung der Ankerschiene,
- Fig. 4: eine schematische Teildarstellung eines Schnitts der nicht erfindungsgemäßen Ankerschiene aus Fig. 3 entlang der Linie IV-IV in Fig. 3,
- Fig. 5 und 6: schematische Teildarstellungen von Ansichten von Ankerschienen von einem Längsende aus in Längsrichtung der jeweiligen Ankerschiene ohne Darstellung der Anker,
- Fig. 7: eine schematische Teildarstellung einer Ansicht einer nicht erfindungsgemäßen Ankerschiene von einem Längsende aus in Längsrichtung der Ankerschiene ohne Darstellung der Anker,
- Fig. 8: eine schematische Teildarstellung einer Ansicht einer Ankerschiene von einem Längsende aus in Längsrichtung der Ankerschiene ohne Darstellung der Anker,
- Fig. 9 bis 13: schematische Teildarstellungen von Ansichten von nicht erfindungsgemäßen Ankerschienen von einem Längsende aus in Längsrichtung der jeweiligen Ankerschiene ohne Darstellung der Anker,
- Fig. 14: eine perspektivische Darstellung einer Ankerschiene,
- Fig. 15: eine Ansicht der Ankerschiene aus Fig. 14 von einem Längsende der Ankerschiene aus in Richtung des Pfeils XV in Fig. 14,
- Fig. 16: eine perspektivische Darstellung eines Befestigungssystems, die Ankerschiene aus Fig. 14 umfassend,
- Fig. 17: eine Ansicht des Befestigungssystems aus Fig. 16 von einem Längsende der Ankerschiene aus in Richtung des Pfeils XVII in Fig. 16,
- Fig. 18: eine Explosionsdarstellung des Befestigungssystems aus den Figuren 16 und 17.

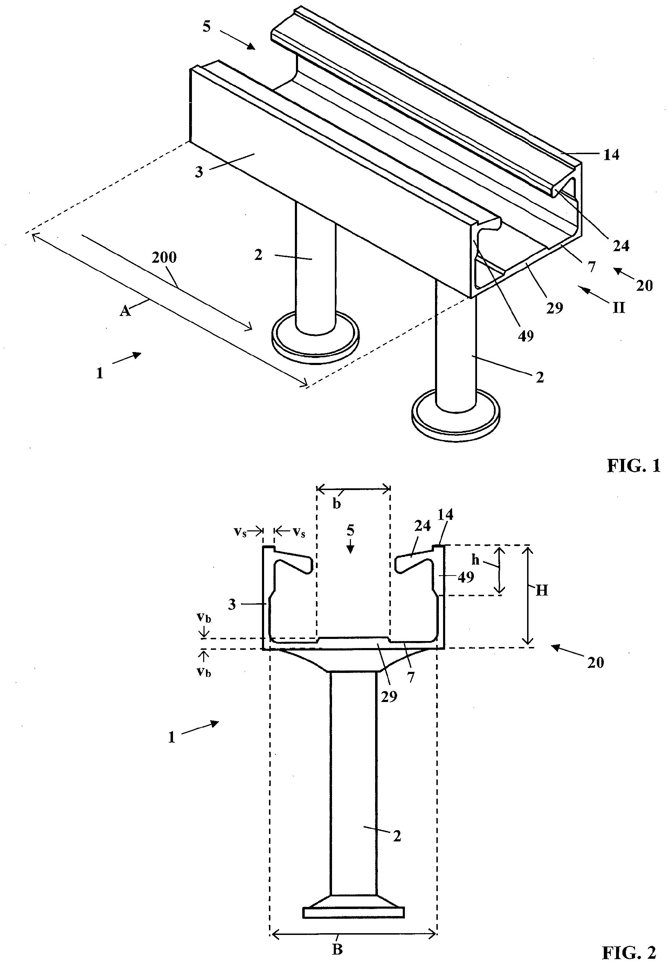

Fig. 1 zeigt die perspektivische Darstellung einer Ankerschiene 1. Solche Ankerschienen werden beispielsweise in Beton eingegossen. Die Ankerschiene 1 besitzt einen im Wesentlichen C-förmigen Querschnitt. Zur Verankerung der Ankerschiene 1 im Beton sind Anker 2 vorgesehen. Die Anker 2 sind orthogonal zu einem ebenen Boden 7 angeordnet. Die Anker 2 sind bezogen auf die Richtung quer zur Längsrichtung 200 der Ankerschiene 1 in der Mitte des Bodens 7 angeordnet. Orthogonal zum Boden 7 sind Seitenwände 3 angeordnet. Die zwei Seitenwände 3 verlaufen parallel zueinander. Die Seitenwände 3 bilden gemeinsam mit dem Boden 7 einen Grundkörper 20 der Ankerschiene 1. Die Seitenwände 3 bilden gemeinsam mit dem Boden 7 Außenkanten des Grundkörpers 20 der Ankerschiene 1. Der Grundkörper 20 besitzt einen im Wesentlichen U-förmigen Querschnitt. An dem dem Boden 7 abgewandten Bereich der Seitenwände 3 sind auf gleicher Höhe freie Schenkel 24 angeordnet. Die Seitenwände 3 überragen die freien Schenkel 24. Der den Ankern abgewandte Bereich der Seitenwände 3 wird bei beiden Seitenwänden auf gleicher Höhe durch die Stirnseiten 14 der Seitenwände 3 begrenzt.

Zwischen den beiden sich gegenüberliegenden Schenkeln 24 ist in Längsrichtung 200 der Ankerschiene 1 ein Schlitz 5 gebildet. In einer Ansicht der Ankerschiene 1 von einem Längsende der Ankerschiene 1 aus in Richtung entgegen der in Fig. 1 eingezeichneten Längsrichtung 200 zeigen die beiden Schenkel 24, wie in Fig. 2 dargestellt, ein hakenförmiges Profil. Die Wandstärke der Schenkel 24 nimmt von den Seitenwänden 3 der Ankerschiene 1 zum Schlitz 5 der Ankerschiene 1 hin zu. Die den Ankern 2 abgewandten Oberflächen der freien Schenkel 24 bilden mit den Seitenwänden einen Winkel > 270°.

Wie in den Figuren 1 und 2 zu erkennen ist, weist der Grundkörper 20 der Ankerschiene 1 am Boden 7 eine Bodenverdickung 29 auf. An der verdickten Stelle ist der Boden 7 ungefähr um die Hälfte dicker als an unverdickten Stellen. Die in Fig. 2 gezeigte Wandstärke v_{b} der Bodenverdickung 29 beträgt ungefähr das 1,5fache der normalen, unverdickten Wandstärke des Grundkörpers 20 der Ankerschiene 1. Die Bodenverdickung 29 ist an der den Ankern 2 abgewandten Seite des Bodens 7 angeordnet. Der Boden 7 besitzt eine in Fig. 2 gekennzeichnete Breite B, die dem Abstand der sich parallel gegenüberliegenden Seitenwände 3 im Übergangsbereich zwischen Boden 7 und Seitenwänden 3 entspricht. Quer zur Längsrichtung 200 der Ankerschiene 1 und des Bodens 7 erstreckt sich die Bodenverdickung 29 über eine Teilbreite b der gesamten Breite B des Bodens 7. Die Teilbreite b ist ungefähr halb so groß wie die gesamte Breite B des Bodens 7. Die Bodenverdickung 29 ist in der Mitte zwischen den sich parallel gegenüberliegenden Seitenwänden 3 und bezogen auf die Richtung quer zur Längsrichtung 200 der Ankerschiene 1 in der Mitte des Bodens 7 angeordnet. Wie Fig. 1 verdeutlicht, erstreckt sich die Bodenverdickung 29 über die gesamte Längsausdehnung des Bodens 7.

Die Figuren 1 und 2 zeigen, dass der Grundkörper 20 der Ankerschiene 1 an den Seitenwänden 3 Seitenwandverdickungen 49 aufweist. Die Wandstärke vₛ der Seitenwandverdickung 49 entspricht der Wandstärke v_{b} der Bodenverdickung 29 und beträgt daher wiederum ungefähr das 1,5fache der Wandstärke des Grundkörpers 20 in unverdickten Bereichen des Grundkörpers 20. Wie in Fig. 2 dargestellt, besitzen die Seitenwände 3 eine Gesamthöhe H. Die Gesamthöhe H der Seitenwände 3 ist über den Abstand der den Ankern 2 abgewandten Stirnseite 14 einer Seitenwand 3 zu der den Ankern 2 zugewandten Seite des Bodens 7 definiert. Die Seitenwandverdickung 49 erstreckt sich über einen Teil dieser Gesamthöhe H einer Seitenwand 3. Die Seitenwandverdickung 49 erstreckt sich ausgehend von der Stirnseite 14 einer Seitenwand 3 hin zum Boden 7 der Ankerschiene 1 über eine Teilhöhe h der Seitenwand 3. Die Teilhöhe h der Seitenwand 3 entspricht ungefähr der Hälfte der Gesamthöhe H der Seitenwand 3. Wie Fig. 1 zeigt, erstreckt sich die Seitenwandverdickung 49 über die gesamte Längsausdehnung einer Seitenwand 3. Die Seitenwandverdickung 49 ist auf der Innenseite der Seitenwand 3 angeordnet. Die Innenseite einer Seitenwand 3 ist der parallel gegenüberliegenden anderen Seitenwand 3 zugewandt.

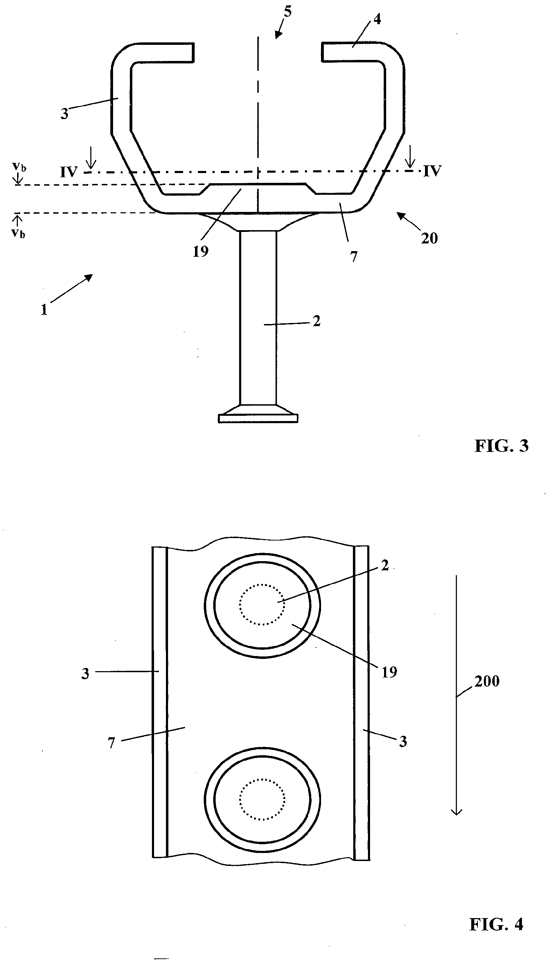

Die Fig. 3 zeigt eine Ansicht einer Ankerschiene 1 von einem Längsende der Ankerschiene 1 aus in Längsrichtung der Ankerschiene 1. Die Ankerschiene 1 umfasst einen Grundkörper 20, bestehend aus Seitenwänden 3 und Boden 7. Die Seitenwände 3 weisen ungefähr auf halber Höhe der Seitenwände 3 einen Knick auf. Im Bereich des Übergangs zwischen Seitenwänden 3 und Boden 7 schließen die Seitenwände 3 und der Boden 7 einen Winkel > 90° ein. Im weiter vom Boden 7 entfernten Bereich der Seitenwände 3 sind die Seitenwände 3 orthogonal zum Boden 7 orientiert. An diesem weiter vom Boden 7 entfernten Bereich der Seitenwände 3 schließen freie Schenkel 4 an die Seitenwände 3 an. Die freien Schenkel 4 sind orthogonal zu den weiter von dem Boden 7 entfernten Bereich der Seitenwände 3 orientiert. Die sich gegenüberliegenden freien Schenkel 4 liegen in einer gemeinsamen Ebene. Die freien Schenkel 4 sind parallel zum Boden 7 angeordnet. Zwischen den freien Schenkeln 4 ist ein Schlitz 5 ausgebildet.

Der Boden 7 der Ankerschiene 1 weist eine Verdickung auf, die als eine Bodenverdickung 19 ausgebildet ist. Die Bodenverdickung 19 ist im Bereich der Anker 2 angeordnet. Dies wird durch Fig. 4 verdeutlicht, die eine schematische Teildarstellung eines Schnitts der Ankerschiene aus Fig. 3 entlang der Linie IV-IV aus Fig. 3 zeigt. In Fig. 4 ist auch der Anker 2 mit gestrichelter Linie eingezeichnet. Der Anker 2 ist in Realität in dieser Ansicht der Ankerschiene 1 nicht zu sehen. Die dem Anker 2 zugeordnete gestrichelte Linie in Fig. 4 zeigt den Hauptdurchmesser des Ankers 2 quer zur Längsrichtung des Ankers 2. Der Hauptdurchmesser des Ankers 2 kann beispielsweise bezogen auf die Längsrichtung des Ankers 2 auf halber Höhe des Ankers 2 gemessen werden. Der durch eine Bodenverdickung 19 verdickte Bereich des Bodens 7 ist mehr als doppelt so groß, wie die mit der gestrichelten Linie eingezeichnete Querschnittsfläche des Ankers 2. Die Fig. 4 zeigt lediglich einen Teilausschnitt der Ankerschiene 1. In Längsrichtung 200 der Ankerschiene 1 sind mehrere Bodenverdickungen 19 in regelmäßigen Abständen zueinander angeordnet. Wie in Fig. 3 zu erkennen ist, geht die Bodenverdickung 19 vom verdickten Bereich des Bodens 7 in den unverdickten Bereich des Bodens 7 fließend über. In diesem Übergangsbereich weist die Bodenverdickung 19 eine kreisförmig umlaufende Schräge auf. Die Wandstärke v_{b} des Bodens 7 im Bereich der Bodenverdickung 19 beträgt ungefähr das 1,5fache der Wandstärke des Bodens 7 im unverdickten Bereich des Bodens 7.

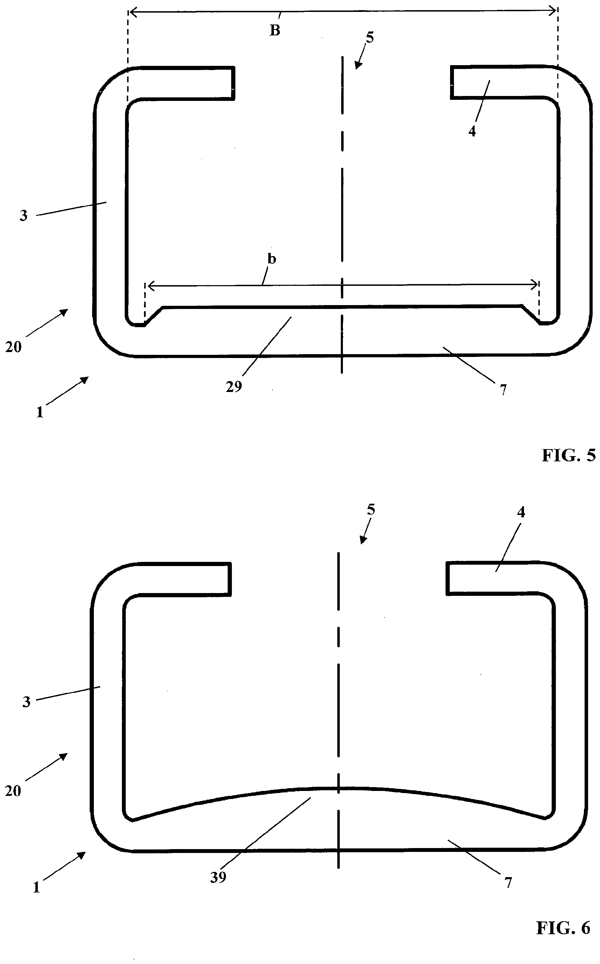

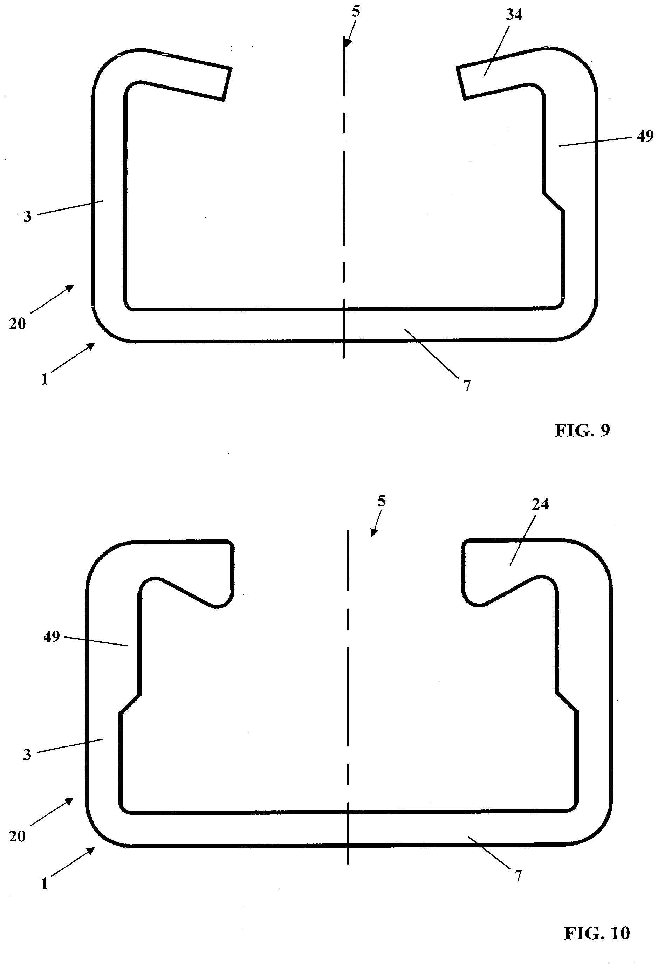

Die Figuren 5 bis 13 zeigen schematische Teildarstellungen von Ansichten von Ankerschienen 1 von einem Längsende aus in Längsrichtung der jeweiligen Ankerschiene 1. Auf die Darstellung der Anker wurde in den Figuren 5 bis 13 verzichtet. Alle in den Figuren 5 bis 13 gezeigten Ankerschienen 1 besitzen einen im Wesentlichen C-förmigen Querschnitt. In allen Figuren bezeichnen gleiche Bezugszeichen sich entsprechende Teile der verschiedenen Ankerschienen 1 oder Befestigungssysteme. Die Außenseiten aller Böden 7 der Ankerschienen 1 in den Figuren 5 bis 13 sind eben ausgebildet. Mit Außenseiten der Böden 7 sind die Seiten der Böden 7 bezeichnet, die den in den Figuren 5 bis 13 nicht gezeigten Ankern 2 zugewandt und den den Böden 7 gegenüberliegenden freien Schenkeln 4, 24 abgewandt sind. Die Innenseiten der Böden 7 liegen den Außenseiten der Böden 7 gegenüber. Die Innenseiten der Böden 7 der Ankerschienen nach den Figuren 9, 10, 11, 12 und 13 sind eben ausgebildet.

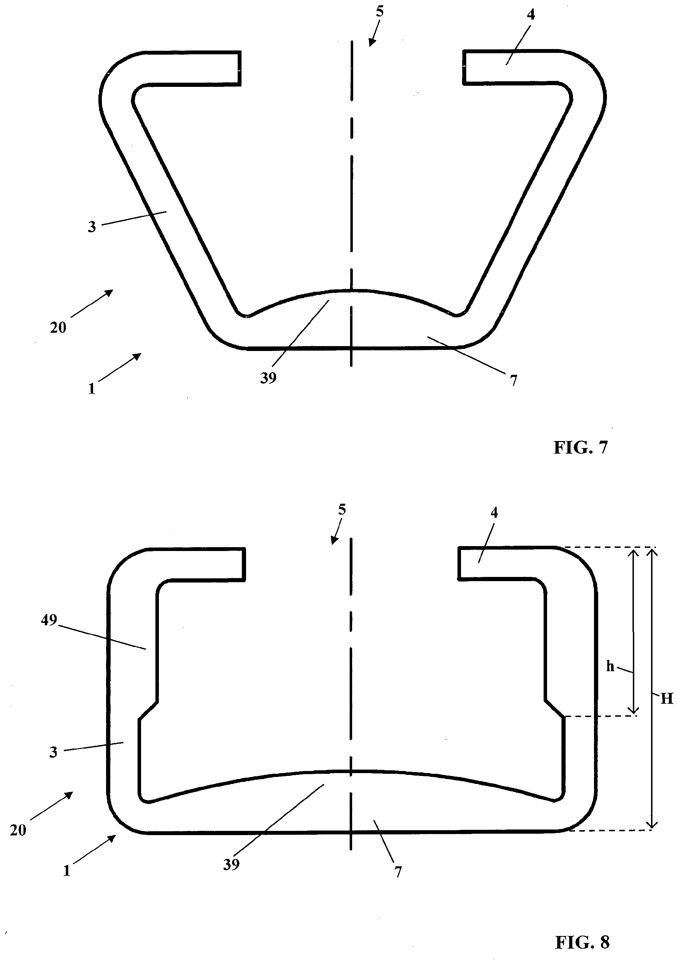

Bei den Ankerschienen 1 nach den Figuren 5, 6, 8, 9, 10, 11, 12 und 13 sind sich gegenüberliegende Seitenwände 3 mit Ausnahme der Übergänge zwischen verdickten und unverdickten Bereichen ausschließlich orthogonal zum Boden 7 angeordnet. Dabei bilden die Seitenwände 3 mit dem Boden 7 Außenkanten. Bei der Ankerschiene 1 gemäß der Fig. 7 sind die beiden Seitenwände 3 eben ausgebildet und schließen mit dem Boden 7 einen Winkel > 90° ein.

Die freien Schenkel 4, 34 der Ankerschienen 1 gemäß den Figuren 5, 6, 7, 8, 9, 11 und 13 weisen eine im Verlauf von den Seitenwänden 3 zu dem Schlitz 5 unveränderliche gleiche Wandstärke auf. Für die Ankerschienen 1 gemäß den Figuren 5, 6, 7, 8, 11, 12 und 13 verlaufen die freien Schenkel 4 parallel zu den ebenen Außenseiten der Böden 7. Für alle Ausführungsbeispiele gemäß den Figuren 5 bis 13 sind die sich gegenüberliegenden freien Schenkel 4, 24, 34 auf gleicher Höhe an dem dem Boden 7 oder dem dem nicht gezeigten Anker abgewandten Bereich der Seitenwände 3 angeordnet. Die freien Schenkel 4 der Ankerschienen 1 gemäß den Ausführungsbeispielen nach den Figuren 5, 6, 8, 11, 12 und 13 sind senkrecht zu den Seitenwänden 3 angeordnet. Die den nicht gezeigten Ankern und den Böden 7 abgewandten Oberflächen der Schenkel 4, 24 der Ankerschienen 1 gemäß den Ausführungsbeispielen nach den Figuren 5, 6, 7, 8, 10, 11, 12 und 13 liegen in derselben Ebene.

Die Wandstärke der Schenkel 24 der Ankerschiene 1 gemäß der Fig. 10 nimmt von den Seitenwänden 3 der Ankerschiene 1 zum Schlitz 5 der Ankerschiene 1 hin zu. Die freien Schenkel 34 der Ankerschiene 1 gemäß der Fig. 9 sind nach innen hin geknickt; die freien Schenkel 34 bilden mit den Seitenwänden 3 einen Winkel < 90°. Der Abstand zwischen dem Bereich der freien Schenkel 34, der näher zum Schlitz 5 der Ankerschienen 1 liegt, und dem Boden 7 ist kleiner als der Abstand zwischen dem Bereich der freien Schenkel 34, der näher zu den Seitenwänden 3 hin liegt, und dem Boden 7.

Alle Ankerschienen 1 gemäß den Figuren 5 bis 13 weisen an ihren Grundkörpern 20 mindestens eine Verdickung auf. Die Ankerschienen 1 gemäß der Figuren 5 bis 8 und 12 und 13 weisen Verdickungen an dem Boden 7 auf. Die Bodenverdickung 29 der Ankerschiene 1 gemäß der Fig. 5 erstreckt sich über eine Teilbreite b der gesamten Breite B des Bodens 7 der Ankerschiene 1. Die gesamte Breite B des Bodens 7 ist die Breite des Bodens 7 quer zur Längsrichtung 200 der Ankerschiene 1. Die Wandstärke des Bodens 7 beträgt im Bereich der Bodenverdickung 29 ungefähr das 1,7fache der Wandstärke des Bodens 7 im unverdickten Bereich. Die Bodenverdickung 29 erstreckt sich entlang der gesamten nicht gezeigten Längsausdehnung der Ankerschiene 1 aus der Fig. 5.

Die Ankerschienen 1 gemäß der Figuren 6, 7, 8, 12 und 13 weisen Bodenverdickungen 39 der Böden 7 auf, die sich über die gesamte Breite B des Bodens 7 erstrecken. Auch diese Bodenverdickungen 39 erstrecken sich über die gesamte nicht gezeigte Längsausdehnung der entsprechenden Ankerschienen 1.

Die Bodenverdickungen 39 der Böden 7 der Ankerschienen 1 gemäß der Figuren 6 bis 8 sind gewölbt an den den Schenkeln 4 zugewandten Innenseiten der Böden 7 ausgebildet. Die Wandstärke der Böden 7 ist durch die Bodenverdickung 39 in der Mitte der Böden 7 bezogen auf die Richtung quer zur nicht gezeigten Längsrichtung der Ankerschiene 1 dicker ausgebildet als in den Randbereichen der Böden 7 nahe der Seitenwände 3. Die Wandstärken der Böden 7 betragen im Bereich der stärksten Dicke der Bodenverdickung 39, also in der Mitte zwischen den gegenüberliegenden Seitenwänden 3, ungefähr das Doppelte der Wandstärken der jeweiligen Grundkörper 20 in unverdickten Bereichen. Die Verdickung der Böden 7 durch die Bodenverdickungen 39 in den Bereichen nahe der Seitenwände 3 ist in den Ausführungsbeispielen nach den Figuren 6 bis 8 minimal und beträgt etwa 1/20 der Wandstärke des jeweiligen Grundkörpers 20 in unverdickten Bereichen. Die Wandstärke der Böden 7 verändert sich von dem dicksten Bereich der Bodenverdickungen 39 hin zu den Bereichen mit den kleinsten Bodenverdickungen 39 kontinuierlich in bogenähnlicher geschwungener Form.

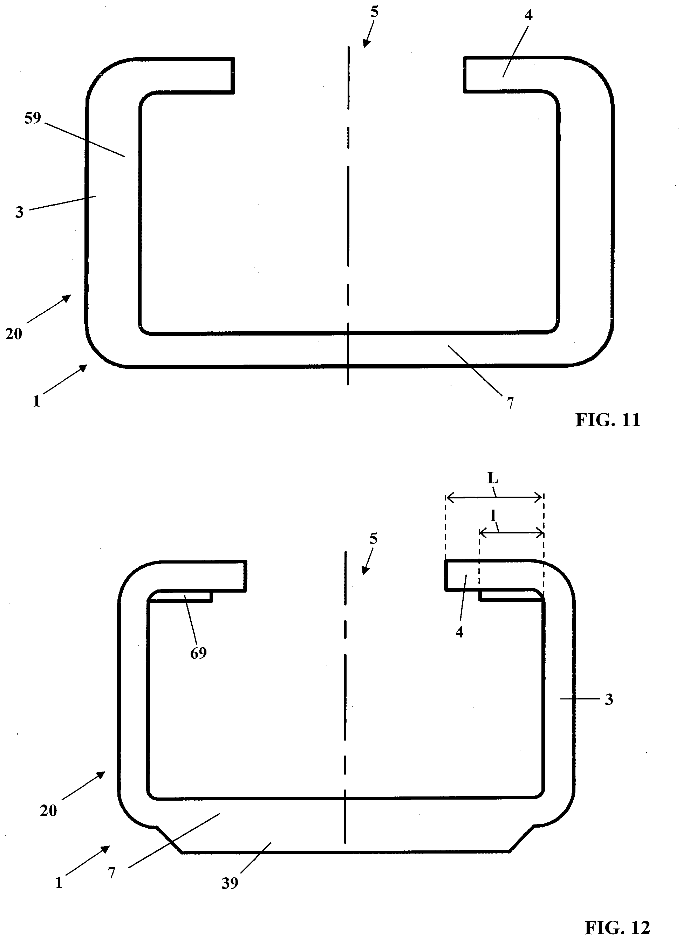

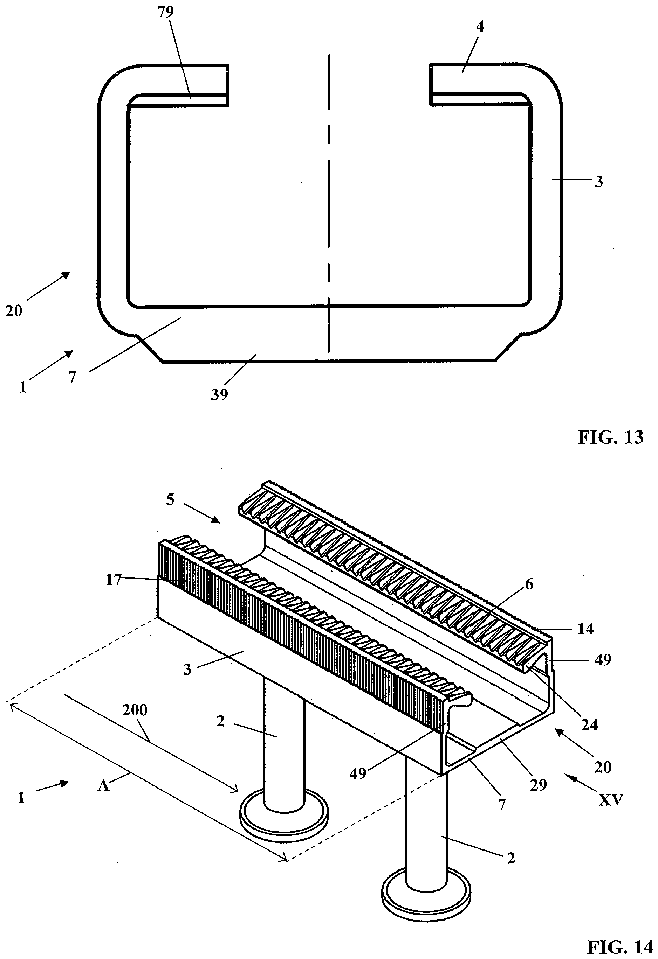

Die Bodenverdickungen 39 gemäß den Ausführungsbeispielen aus den Figuren 12 und 13 sind an den den freien Schenkeln 4 abgewandten Außenseiten der Böden 7 der jeweiligen Ankerschiene 1 angeordnet. Durch die Bodenverdickungen 39 sind die Wandstärken der Böden 7 in den Figuren 12 und 13 nahezu über die gesamte Breite B der Böden 7 doppelt so dick wie die Wandstärke der jeweiligen Grundkörper 20 in unverdickten Bereichen der Grundkörper 20. Lediglich in den Randbereichen der Bodenverdickungen 39, in der Nähe der Seitenwände 3 sind die Bodenverdickungen 39 leicht angeschrägt. Dadurch ergibt sich ein nahezu fließender Übergang zwischen dem durch die Bodenverdickung 39 verdickten Bereich des Bodens 7 und dem unverdickten Übergangsbereich zwischen Boden 7 und Seitenwänden 3.

Die Ankerschienen 1 gemäß der Figuren 8 bis 11 weisen an ihren Seitenwänden 3 Seitenwandverdickungen 49, 59 auf. Die Seitenwandverdickungen 49 der Seitenwände 3 der Ankerschienen aus den Figuren 8 bis 10 erstrecken sich lediglich über eine Teilhöhe h der Seitenwände 3. Die Seitenwandverdickung 59 der Ankerschiene 1 aus der Fig. 11 erstreckt sich über die gesamte Höhe H der Seitenwand 3. Die gesamte Höhe H einer Seitenwand 3 ist die Höhe einer Seitenwand 3 quer zu ihrer Längsrichtung und wird in Richtung des Ankers 2 gemessen. Die Längsrichtung der Seitenwand 3 zeigt in die gleiche Richtung wie die Längsrichtung 200 der Ankerschiene 1. Alle Seitenwandverdickungen 49, 59 erstrecken sich über die gesamte nicht gezeigte Längsausdehnung der Ankerschienen 1 gemäß den Figuren 8 bis 11. Die Wandstärke der Seitenwände 3 ist in den durch Seitenwandverdickungen 49, 59 verdickten Bereichen der Ankerschienen 1 gemäß den Figuren 8 bis 11 doppelt so dick wie in unverdickten Bereichen der jeweiligen Grundkörper 20. Die Wandverdickungen 49 gemäß den Figuren 8 bis 10, die sich lediglich über eine Teilhöhe h der jeweiligen Seitenwände 3 erstrecken, erstrecken sich ausgehend von den freien Schenkeln 4, 24, 34 in Richtung zu den Böden 7 hin und sind auf den einander zugewandten Innenseiten der Seitenwände 3 angeordnet. Die mit den Seitenwandverdickungen 49 verdickten Teilhöhen h der Seitenwände 3 entsprechen ungefähr der Hälfte der Gesamthöhen H der Seitenwände 3 der Ankerschienen 1 aus den Figuren 8 bis 10.

Die freien Schenkel 4 der Ankerschienen 1 gemäß den Figuren 12 und 13 weisen an ihren den Böden 7 zugewandten Innenseiten Schenkelverdickungen 69, 79 auf. Für beide Ausführungsbeispiele erstrecken sich die Schenkelverdickungen 69, 79 über die gesamte nicht gezeigte Längsausdehnung der jeweiligen Ankerschiene 1. Die Wandstärke der freien Schenkel 4 im Bereich der Seitenwandverdickungen 69, 79 beträgt ungefähr das 1,3fache der Wandstärke der jeweiligen Grundkörper 20 der jeweiligen Ankerschiene 1. In der Fig. 12 ist die Breite L eines freien Schenkels 4 eingezeichnet. Die Breite L entspricht der Erstreckung des freien Schenkels 4 von der Verbindungsstelle von einer Seitenwand 3 bis zum nächstgelegenen Rand des Schlitzes 5 der Ankerschiene 1. Die Schenkelverdickung 79 der Ankerschiene 1 gemäß der Fig. 13 erstreckt sich über die gesamte Breite L des zugehörigen freien Schenkels 4. Die Schenkelverdickung 69 der freien Schenkel 4 der Ankerschiene 1 gemäß der Fig. 12 erstreckt sich lediglich über eine Teilbreite 1 der gesamten Breite L der freien Schenkel 4. Die Schenkelverdickung 69 der freien Schenkel 4 der Ankerschiene 1 gemäß der Fig. 12 erstreckt sich ausgehend vom Übergang zwischen der zugeordneten Seitenwand 3 und dem jeweiligen freien Schenkel 4 in Richtung zum Schlitz 5 der Ankerschiene 1 hin über die Teilbreite 1 des freien Schenkels 4. Die Teilbreite 1 des freien Schenkels 4, über die sich die Schenkelverdickung 69 erstreckt, beträgt ungefähr zwei Drittel der gesamten Breite B eines freien Schenkels 4.

Die Fig. 14 zeigt die perspektivische Darstellung einer Ankerschiene 1. Zur Verankerung der Ankerschiene 1 im Beton sind Anker 2 vorgesehen. Die Anker 2 sind orthogonal zu einem ebenen Boden 7 angeordnet. Die Anker 2 sind bezogen auf die Richtung quer zur Längsrichtung 200 der Ankerschiene 1 in der Mitte des Bodens 7 angeordnet. Orthogonal zum Boden 7 der Ankerschiene 1 sind zwei Seitenwände 3 angeordnet. Die zwei Seitenwände 3 verlaufen parallel zueinander. Die Seitenwände 3 bilden gemeinsam mit dem Boden 7 Außenkanten des Grundkörpers 20 der Ankerschiene 1. Der Grundkörper 20 umfasst den Boden 7 und die beiden Seitenwände 3. An dem dem Boden 7 abgewandten Bereich der Seitenwände 3 sind auf gleicher Höhe freie Schenkel 24 angeordnet. Die Seitenwände 3 überragen die freien Schenkel 24. Der den Ankern 2 abgewandte Bereich der Seitenwände 3 wird bei beiden Seitenwänden 3 auf gleicher Höhe durch die Stirnseiten 14 der Seitenwände 3 begrenzt.

Zwischen den beiden sich gegenüberliegenden Schenkeln 24 ist in Längsrichtung 200 der Ankerschiene 1 ein Schlitz 5 gebildet. In einem Querschnitt quer zur Längsrichtung 200 der Ankerschiene 1 zeigen die beiden Schenkel 24 ein hakenförmiges Profil. Die Wandstärke der Schenkel 24 nimmt von den Seitenwänden 3 der Ankerschiene 1 zum Schlitz 5 der Ankerschiene 1 hin zu. Die den Ankern 2 abgewandten Oberflächen der freien Schenkel 24 bilden mit den Seitenwänden einen Winkel > 270°. Die den Ankern abgewandten Oberflächen der freien Schenkel 24 sind mit einer Verzahnung 6 versehen. Die Verzahnung 6 der freien Schenkel 24 ist quer zur Längsrichtung 200 der Ankerschiene 1 orientiert. Die den Ankern 2 abgewandte Seite der Schenkel 24 wird auch als vordere Außenseite der Ankerschiene 1 bezeichnet. Bezogen auf die Längserstreckung A besitzen die freien Schenkel 24 an der vorderen Außenseite der Ankerschiene 1 eine durchgehende Verzahnung 6. Die Verzahnung 6 der Außenseiten der Schenkel 24 erstreckt sich vom Schlitz 5 der Ankerschiene 1 bis etwa zu den Ebenen, in denen auch die Innenwände der Seitenwände 3 liegen.

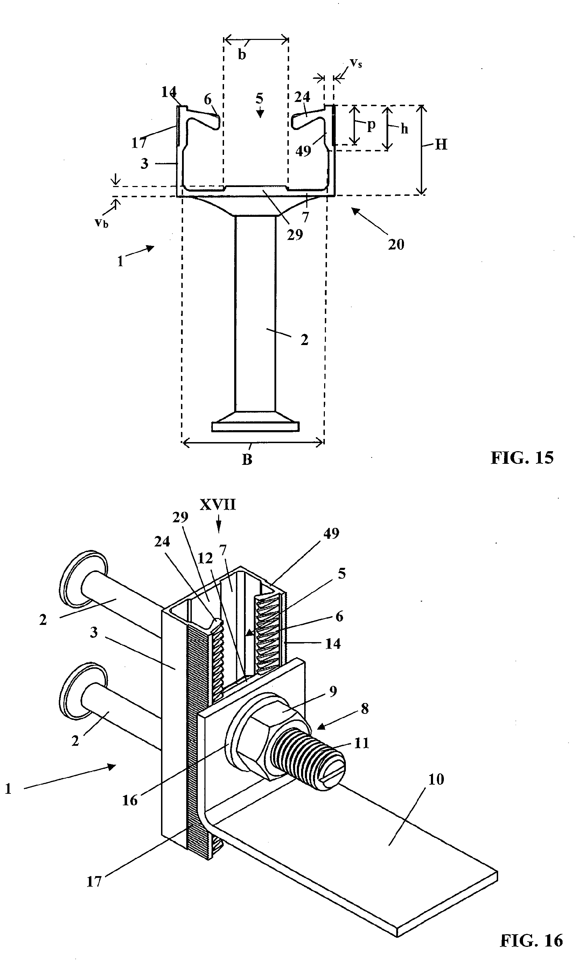

Fig. 15 zeigt eine Ansicht der Ankerschiene 1 aus Fig. 14 von einem Längsende der Ankerschiene 1 aus in Richtung des in Fig. 14 mit XV gekennzeichneten Pfeils, also entgegen der in Fig. 14 gekennzeichneten Längsrichtung 200 der Ankerschiene 1. Wie in den Figuren 14 und 15 zu erkennen, weist der Grundkörper 20 der Ankerschiene 1 am Boden 7 eine Bodenverdickung 29 auf. An der verdickten Stelle ist der Boden 7 ungefähr um die Hälfte dicker als an unverdickten Stellen. Die in Fig. 15 gezeigte Wandstärke v_{b} des Bodens 7 des Grundkörpers 20 im Bereich der Bodenverdickung 29 beträgt ungefähr das 1,5fache der normalen, unverdickten Wandstärke des Grundkörpers 20 der Ankerschiene 1. Die Bodenverdickung 29 ist an der den Ankern 2 abgewandten Seite des Bodens 7 angeordnet. Der Boden 7 besitzt eine in Fig. 15 gekennzeichnete Breite B, die dem Abstand der sich parallel gegenüberliegenden Seitenwände 3 im Übergangsbereich zwischen Boden 7 und Seitenwänden 3 entspricht. Quer zur Längsrichtung 200 der Ankerschiene 1 und des Bodens 7 erstreckt sich die Bodenverdickung 29 über eine Teilbreite b der gesamten Breite B des Bodens 7. Die Teilbreite b ist ungefähr halb so groß wie die gesamte Breite B des Bodens 7. Die Bodenverdickung 29 ist in der Mitte zwischen den sich parallel gegenüberliegenden Seitenwänden 3 und bezogen auf die Richtung quer zur Längsrichtung 200 der Ankerschiene 1 in der Mitte des Bodens 7 angeordnet. Wie Fig. 14 verdeutlicht, erstreckt sich die Bodenverdickung 29 über die gesamte Längsausdehnung A des Bodens 7.

Die Figuren 14 und 15 zeigen, dass der Grundkörper 20 der Ankerschiene 1 an den Seitenwänden 3 Seitenwandverdickungen 49 aufweist. Die Wandstärke vₛ der Seitenwandverdickung 49 entspricht der Wandstärke v_{b} der Bodenverdickung 29 und beträgt daher wiederum ungefähr das 1,5fache der Wandstärke des Grundkörpers 20 in unverdickten Bereichen. Wie in Fig. 15 dargestellt, besitzen die Seitenwände 3 eine Gesamthöhe H. Die Gesamthöhe H der Seitenwände 3 ist über den Abstand der den Ankern 2 abgewandten Stirnseite 14 einer Seitenwand 3 zu der den Ankern 2 zugewandten Seite des Bodens 7 definiert. Die Seitenwandverdickung 49 erstreckt sich über einen Teil dieser Gesamthöhe H einer Seitenwand 3. Die Seitenwandverdickung 49 erstreckt sich ausgehend von der Stirnseite 14 einer Seitenwand 3 hin zum Boden 7 der Ankerschiene 1 über eine Teilhöhe h der Seitenwand 3. Die Teilhöhe h der Seitenwand 3 entspricht ungefähr der Hälfte der Gesamthöhe H der Seitenwand 3. Wie Fig. 14 zeigt, erstreckt sich die Seitenwandverdickung 49 über die gesamte Längsausdehnung A einer Seitenwand 3. Die Seitenwandverdickung 49 ist auf der Innenseite der Seitenwand 3 angeordnet. Die Innenseite einer Seitenwand 3 ist der parallel gegenüberliegenden anderen Seitenwand 3 zugewandt.

An den Außenseiten der Seitenwände 3 ist eine Profilierung als Seitenwandprofilierung 17 angeordnet. Die Seitenwandprofilierung 17 erstreckt sich über die in Fig. 15 gezeigte Teilhöhe p der Gesamthöhe H einer Seitenwand 3. Die Teilhöhe p beträgt etwas weniger als die Hälfte der Gesamthöhe H der Seitenwand 3 und damit etwas weniger als die Teilhöhe h, über die sich die Seitenwandverdickung 49 erstreckt.

In Richtung der Längsrichtung 200 der Ankerschiene 1 erstrecken sich die Seitenwandprofilierungen 17 über die gesamte Länge A der Längserstreckung der Ankerschiene 1. Die Seitenwandprofilierungen 17 bestehen aus parallel zueinander angeordneten Rillen, die in die nach außen zeigenden Oberflächen der Seitenwände 3 der Ankerschiene 1 eingebracht sind. Wie in Fig. 15 zu erkennen, sind die Seitenwände 3 im Bereich der Seitenwandprofilierungen 17 mit den Seitenwandverdickungen 49 verdickt. Die Wandstärke der Seitenwände 3 beträgt im Bereich der Seitenwandverdickung 49 ungefähr das 1,5fache der Wandstärke des Grundkörpers 20 in unverdickten Bereichen und ist in Fig. 15 mit vₛ gekennzeichnet. Die Tiefe der zur Profilierung in die Seitenwände eingebrachten Rillen der Seitenwandprofilierung 17 beträgt ungefähr ein Viertel der Wandstärke vₛ der Seitenwände 3 des Grundkörpers 20 in den durch die Seitenwandverdickungen 49 verdickten Bereichen. Die Seitenwandprofilierungen 17 stehen nicht über die ebenen Oberflächen der Seitenwände 3 hervor.

In Fig. 15 ist zu erkennen, dass die Verzahnung 6 der Schenkel 24 in dem dem Schlitz 5 benachbarten Bereich der Schenkel 24 tiefer ist als im weiter vom Schlitz 5 entfernten Bereich der Schenkel 24. Die Länge des Ankers 2 in seiner Längsrichtung beträgt mehr als doppelt so viel wie die Höhe H der Seitenwände 3. Die Höhe H der Seitenwände 3 erstreckt sich in Längsrichtung des Ankers 2. Der Abstand der beiden parallel zueinander verlaufenden Seitenwände 3 beträgt im Bereich des Übergangs zwischen Boden 7 und Seitenwänden 3 in etwa doppelt so viel wie die Breite des Schlitzes 5 und entspricht der Breite B des Bodens 7. Die Breite des Schlitzes 5 ist hierbei der kleinste Abstand der beiden gegenüberliegenden Schenkel 24.

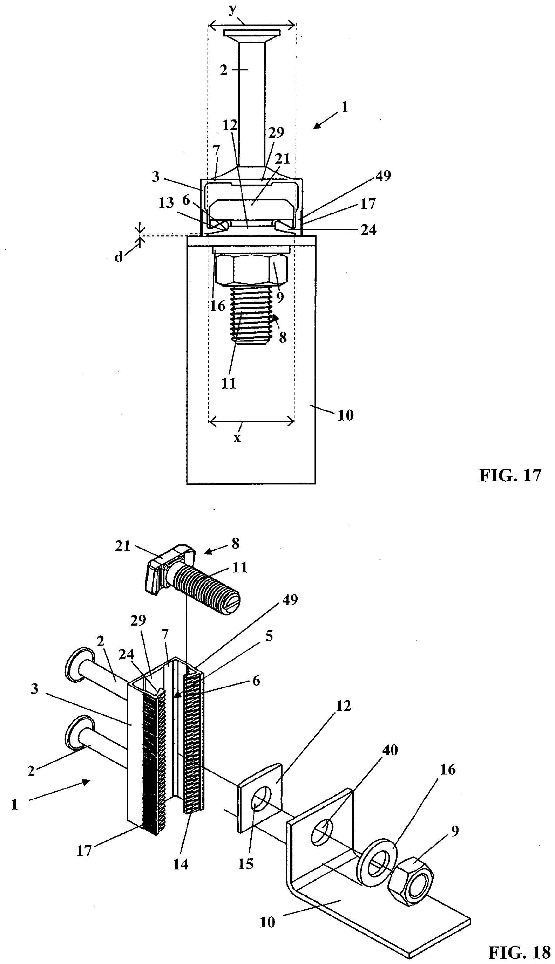

Die Fig. 16 zeigt die perspektivische Darstellung eines Befestigungssystems zur Sicherung einer Kopfschraube 8 innerhalb einer im Beton zu befestigenden Ankerschiene 1. Die Fig. 17 zeigt eine Ansicht des Befestigungssystems aus Fig. 16 von einem Längsende der Ankerschiene 1 aus in Richtung des in Fig. 16 mit XVII gekennzeichneten Pfeils, also in Längsrichtung der Ankerschiene 1. Die Fig. 18 zeigt eine Explosionsdarstellung des in den Figuren 16 und 17 gezeigten Befestigungssystems. Die Ankerschiene 1 entspricht in den Figuren 16, 17 und 18 der in der Fig. 14 dargestellten Ankerschiene. Mit Hilfe der Kopfschraube 8 ist ein Gegenstand 10 an der Ankerschiene 1 befestigt. Die Kopfschraube 8 umfasst einen Kopf 21, mit dem sie in der Ankerschiene 1 gehalten wird. Hierbei hintergreift der Kopf 21 der Kopfschraube 8 die Schenkel 24 der Ankerschiene 1. Typischerweise ist die Kopfschraube 8 eine Hammerkopfschraube. Zur Einbringung des Kopfes 21 der Hammerkopfschraube wird die Längsrichtung des Hammerkopfes parallel zur Längsrichtung 200 der Ankerschiene 1 ausgerichtet, so dass der Kopf 21 der Hammerkopfschraube durch den Schlitz 5 der Ankerschiene 1 hindurchgesteckt werden kann. Anschließend wird der Kopf 21 der Hammerkopfschraube um 90° um die Längsachse des Gewindeschafts 11 der Hammerkopfschraube gedreht, so dass eine Entfernung der Hammerkopfschraube aus der Schiene der Ankerschiene 1 durch eine alleinige Bewegung der Hammerkopfschraube in Richtung weg von den Ankern 2 der Ankerschiene 1 nicht möglich ist. Eine solche Bewegung wird durch das Auftreffen der dem Gewindeschaft der Hammerkopfschraube zugewandten Flächen des Kopfes 21 der Hammerkopfschraube auf die den Ankern 2 der Ankerschiene 1 zugewandten innenseitigen Oberflächen der freien Schenkel 24 gestoppt. In der beschriebenen Position der Hammerkopfschraube ragt der Gewindeschaft 11 der Hammerkopfschraube aus dem Schlitz 5 der Ankerschiene 1 in Richtung parallel zu den Ankern 2 aus der Ankerschiene 1 hervor. Die Position der Kopfschraube 8 in Längsrichtung 200 der Ankerschiene 1 wird mit Hilfe einer Rastungsplatte 12 fixiert. Wie in der Fig. 18 zu erkennen, weist die Rastungsplatte 12 eine Durchgangsöffnung 15 auf. Der Durchmesser der Durchgangsöffnung 15 ist dem Durchmesser des Gewindeschafts 11 der Kopfschraube 8 angepasst. Der Gewindeschaft 11 der Kopfschraube 8 kann durch die Durchgangsöffnung 15 der Rastungsplatte 12 gesteckt werden. Die Rastungsplatte 12 besitzt zwei sich gegenüberliegende Oberflächen, durch die die Durchgangsöffnung 15 führt. Eine der beiden Oberflächen ist eben ausgebildet. Die andere der beiden Oberflächen weist eine Verzahnung 13 (Fig. 17) auf, die mit der Verzahnung 6 der Ankerschiene 1 korrespondiert. Wie in der Fig. 17 gezeigt, wird zur Fixierung der in der Schiene der Ankerschiene 1 befindlichen Kopfschraube 8 der Gewindeschaft 11 der Kopfschraube 8 durch die Durchgangsöffnung 15 der Rastungsplatte 12 gesteckt. Hierbei wird die Rastungsplatte 12 so auf den Gewindeschaft 11 der Kopfschraube 8 gebracht, dass die die Verzahnung 13 aufweisende Oberfläche der Rastungsplatte 12 in Richtung der Anker 2 der Ankerschiene 1 zeigt. Die Zähne der Verzahnungen 13 der Rastungsplatte 12 und der Verzahnungen 6 der freien Schenkel 24 der Ankerschiene 1 greifen bei der Fixierung der Kopfschraube 8 mit Hilfe der Rastungsplatte 12 ineinander. Hierbei bildet die unverzahnte, den Ankern 2 abgewandte Oberfläche der Rastungsplatte 12 eine Ebene mit den Stirnseiten 14 der Seitenwände 3 der Ankerschiene 1. Hierzu überragen die Seitenwände 3 der Ankerschiene 1 die freien Schenkel 24 um die Dicke d. Die Dicke d ist die Dicke der beiden sich gegenüberliegenden Ränder der Rastungsplatte 12, die beim Positionieren der Rastungsplatte 12 auf den freien Schenkeln 24 der Ankerschiene 1 in Längsrichtung 200 der Ankerschiene 1 verlaufen. Wie in Fig. 17 gezeigt, schließen diese Seitenränder der Rastungsplatte 12 bündig mit den Seitenwänden 3 der Ankerschiene 1 ab.

Die Rastungsplatte ist in diesem Ausführungsbeispiel rechteckig ausgeführt, und der Abstand der sich gegenüberliegenden parallel zueinander verlaufenden Seitenränder der Rastungsplatte 12 wird als Breite x bezeichnet. Die Breite x der Rastungsplatte 12 entspricht dem Abstand y der Innenseiten der Seitenwände 3 der Ankerschiene 1 auf Höhe der an den Seitenwänden 3 angeordneten Schenkel 24. Die Stirnseiten 14 der Seitenwände 3 und die Rastungsplatte 12 bilden so, wie in der Fig. 17 gezeigt, eine bündige, ebene Fläche. Auf diese Ebene kann ein zu befestigender Gegenstand 10 aufgebracht werden.

Ein zu befestigender Gegenstand 10 muss eine in Fig. 18 gezeigte Öffnung 40 aufweisen, durch die dieser Gewindeschaft 11 gesteckt werden kann oder in die der Gewindeschaft 11 geschraubt werden kann. In der Fig. 16 ist der Gewindeschaft 11 der Kopfschraube 8 durch eine solche Öffnung 40 eines befestigten Gegenstands 10 gesteckt und die Kopfschraube 8 mit Hilfe einer Tellerfeder 16 und einer Befestigungsmutter 9 in der Ankerschiene 1 fixiert. Anstatt einer Tellerfeder kann auch die Verwendung einer Unterlegscheibe vorgesehen sein. Hierzu ist die Befestigungsmutter 9 auf den Gewindeschaft 11 der Kopfschraube 8 geschraubt. Beim Festschrauben der Befestigungsmutter 9 werden die dem Gewindeschaft 11 zugewandten Oberflächen des Kopfes 21 der Kopfschraube 8 gegen die den Ankern 2 zugewandten Innenflächen der freien Schenkeln 24 gedrückt. Gleichzeitig wird die Rastungsplatte 12 gegen die freien Schenkel 24 der Ankerschiene 1 gedrückt. Wie in der Fig. 17 gezeigt, greifen hierbei die Zähne der Verzahnungen 13 der Rastungsplatte 12 in die Zähne der Verzahnung 6 der freien Schenkel 24 der Ankerschiene 1. So wird die Position der Kopfschraube 8 endgültig in der Ankerschiene 1 festgelegt. Gleichzeitig wird der Gegenstand 10 an der Ankerschiene 1 befestigt. Wie in den Figuren 16 bis 18 zu erkennen, ist die Rastungsplatte 12 hierbei zwischen dem zu befestigenden Gegenstand 10 und den freien Schenkeln 24 der Ankerschiene 1 angeordnet. Die Rastungsplatte 12 und die Verzahnungen 13 der Rastungsplatte 12 sind so an die Winkelstellung der freien Schenkel 24 und an die Verzahnung 6 der freien Schenkel 24 angepasst, dass beim Befestigen des Gegenstands 10 mit Hilfe der Kopfschraube 8 und der Befestigungsmutter 9 nahezu die gesamte dem Anker 2 der Ankerschiene 1 zugewandte Fläche der Rastungsplatte 12 formschlüssig auf den Schenkeln 24 der Ankerschiene 1 aufliegt.

Die in den Figuren 16 bis 18 dargestellte Ankerschiene 1 kann gemäß jeder der in den vorangehenden Figuren 1 bis 15 dargestellten Ankerschienen ausgebildet sein. Dabei kann es vorgesehen sein, dass die Form der Rastungsplatte 12 an die Form der Schenkel 4, 24, 34 der Ankerschiene 1 angepasst ist. Insbesondere kann die Form der Verzahnung 13 der Rastungsplatte 12 an die Form der Verzahnung der freien Schenkel 4, 24, 34 der Ankerschiene angepasst sein. Hierbei kann vorgesehen sein, dass die beiden Bauteile an ihrer Kontaktfläche formschlüssig ineinandergreifen. Es kann aber auch vorgesehen sein, dass die Zähne der Verzahnungen der Rastungsplatte und die Zähne der Verzahnungen der Schenkel der Ankerschiene lediglich so ausgebildet sind, dass sie unter Bildung von Hohlräumen ineinandergreifen. Weiterhin kann vorgesehen sein, dass die Form der Rastungsplatte 12 an jede beliebige Winkelstellung der freien Schenkel 4, 24, 34 so angepasst ist, dass die Rastungsplatte 12 beim Befestigen eines Gegenstands 10 mit Hilfe einer Kopfschraube 8 und einer Befestigungsmutter 9 formschlüssig auf den Schenkeln 4, 24, 34 der Ankerschiene 1 aufliegt.

## Patentansprüche

1. Ankerschiene zur Verankerung im Beton mit einem im Wesentlichen C-förmigen Querschnitt, wobei die Ankerschiene (1) einen im Querschnitt im Wesentlichen U-förmigen Grundkörper (20), zwei freie Schenkel (4, 24, 34) und mindestens einen Anker (2) umfasst, wobei der Grundkörper (20) einen Boden (7) und zwei Seitenwände (3) umfasst, wobei die zwei freien Schenkel (4, 24, 34) gegenüber dem Boden (7) des Grundkörpers angeordnet sind, wobei der zumindest eine Anker (2) an einer Außenseite des Bodens (7) festgelegt ist, wobei die Außenseite des Bodens (7) den dem Boden (7) gegenüberliegenden freien Schenkeln (4, 24, 34) abgewandt ist, wobei zwischen den freien Schenkeln (4, 24, 34) ein Schlitz (5) in Längsrichtung (200) der Ankerschiene (1) gebildet ist, wobei die Ankerschiene (1) mindestens eine Verdickung am Grundkörper (20) aufweist, wobei die Verdickung an dem Boden (7) zumindest im Bereich mindestens eines Ankers (2) angeordnet und als eine Bodenverdickung (19, 29, 39) ausgebildet ist, wobei die Seitenwände (3) senkrecht in Bezug auf den Boden (7) angeordnet sind, wobei die Seitenwände (3) mit dem Boden (7) Außenkanten bilden, wobei die Seitenwände (3) parallel zueinander verlaufen,
**dadurch gekennzeichnet, dass** der Boden (7) an seiner Außenseite eben ausgebildet ist, dass die Bodenverdickung (29) an einer der Außenseite des Bodens (7) gegenüberliegenden Innenseite des Bodens (7) angeordnet ist.

2. Ankerschiene nach Anspruch 1,
**dadurch gekennzeichnet, dass** sich die Bodenverdickung (29, 39) über die gesamte Längsausdehnung des Bodens (7) erstreckt, und dass sich die Bodenverdickung (29, 39) quer zur Längsrichtung (200) der Ankerschiene (1) zumindest über eine Teilbreite (b) des Bodens (7) erstreckt.

3. Ankerschiene nach Anspruch 1 oder 2,
**dadurch gekennzeichnet, dass** sich die Bodenverdickung (39) über die gesamte Breite (B) des Bodens (7) erstreckt.

4. Ankerschiene nach einem der Ansprüche 1 bis 3,
**dadurch gekennzeichnet, dass** eine Verdickung an mindestens einer Seitenwand (3) zumindest im Bereich nahe des der Seitenwand (3) zugeordneten freien Schenkels (4, 24, 34) als eine Seitenwandverdickung (49, 59) ausgebildet ist und, dass sich die Seitenwandverdickung zumindest über eine Teilhöhe (h) der Seitenwand (3) erstreckt.

5. Ankerschiene nach Anspruch 4,
**dadurch gekennzeichnet, dass** sich die Seitenwandverdickung (59) über die gesamte Höhe (H) der Seitenwand (3) erstreckt.

6. Ankerschiene nach einem der Ansprüche 1 bis 5,
**dadurch gekennzeichnet, dass** mindestens ein Schenkel (4) zumindest im Bereich nahe der dem Schenkel (4) zugeordneten Seitenwand (3) eine Schenkelverdickung (69, 79) aufweist, und dass sich die Schenkelverdickung (69, 79) zumindest über eine Teilbreite (1) des Schenkels (4) erstreckt.

7. Ankerschiene nach Anspruch 6,
**dadurch gekennzeichnet, dass** sich die Schenkelverdickung (79) über die gesamte Breite (L) des Schenkels (4) erstreckt.

8. Ankerschiene nach einem der Ansprüche 1 bis 7,
**dadurch gekennzeichnet, dass** der Grundkörper mehrere Verdickungen aufweist, und dass die Dicke (vₛ, v_{b}) aller Verdickungen gleich ist.

9. Ankerschiene nach einem der Ansprüche 3 bis 8,
**dadurch gekennzeichnet, dass** die Bodenverdickung (39) des Bodens (7) im Bereich der angeordneten Anker (2) dicker ist als im Bereich des Bodens (7) nahe den Seitenwänden (3), und dass das Dickenprofil des Bodens (7) quer zur Längsrichtung (200) der Ankerschiene (1) an einer beliebigen Stelle der Ankerschiene (1) dem Dickenprofil der Bodenverdickung (49) quer zur Längsrichtung (200) der Ankerschiene (1) im Bereich des Ankers (2) entspricht.

10. Ankerschiene nach einem der Ansprüche 1 bis 9,
**dadurch gekennzeichnet, dass** die Wandstärke mindestens eines Schenkels (24) von der ihm zugeordneten Seitenwand (3) der Ankerschiene (1) zum Schlitz (5) der Ankerschiene (1) hin zunimmt.

11. Ankerschiene nach einem der Ansprüche 1 bis 10,
**dadurch gekennzeichnet, dass** die Schenkel (4) der Ankerschiene (1) und zumindest der an die Schenkel (4) angrenzende Teil der Seitenwände (3) der Ankerschiene (1) orthogonal zueinander orientiert sind, und dass die dem Anker (2) abgewandten Oberflächen der Schenkel (4) in derselben Ebene liegen.

12. Ankerschiene nach einem der Ansprüche 1 bis 10,
**dadurch gekennzeichnet, dass** die Oberflächen der freien Schenkel (4, 24) auf gleicher Höhe an den dem Boden (7) abgewandten Bereichen der Seitenwände (3) senkrecht zu den Seitenwänden (3) angeordnet sind.

13. Ankerschiene nach einem der Ansprüche 1 bis 10,
**dadurch gekennzeichnet, dass** die dem Boden (7) zugewandten Innenseiten der Schenkel (24, 34) mit den Seitenwänden (3) einen Winkel < 90° einschließen.

## Claims

1. Anchor rail for anchoring in concrete, the anchor rail having a substantially C-shaped cross-section, wherein the anchor rail (1) comprises a base body (20) with a substantially C-shaped cross-section, two free legs (4, 24, 34) and at least one anchor (2),
wherein the base body (20) comprises a base (7) and two side walls (3), wherein the two free legs (4, 24, 34) are located opposite the base (7) of the base body,
wherein the at least one anchor (2) is fixed to an outside of the base (7), wherein the outside of the base (7) is averted from the free legs (4, 24, 34) located opposite the base (7),
wherein a slot (5) is formed in the longitudinal direction (200) of the anchor rail (1) between the free legs (4, 24, 34),
wherein the anchor rail (1) has at least one thickening at the base body (20), wherein the thickening is located at the base (7) at least in the region of at least one anchor (2) and is designed as a base thickening (19, 29, 39),
wherein the side walls (3) are perpendicular with respect to the base (7), wherein the side walls (3) form outer edges with the base (7),
wherein the side walls (3) extend parallel to each other,
**characterised in that** the base (7) is designed flat on its outside, and **in that** the base thickening (29) is located on an inside of the base (7) opposite the outside of the base (7).

2. Anchor rail according to claim 1,
**characterised in that** the base thickening (29, 39) extends along the entire longitudinal extent of the base (7), and **in that** the base thickening (29, 39) extends across at least a part-width (b) of the base (7) transversely to the longitudinal direction (200) of the anchor rail (1).

3. Anchor rail according to claim 1 or 2,
**characterised in that** the base thickening (39) extends across the entire width (B) of the base (7).

4. Anchor rail according to any of claims 1 to 3,
**characterised in that** a thickening on at least one side wall (3) is designed as a side wall thickening (49, 59) at least in the region close to the free leg (4, 24, 34) assigned to the side wall (3), and **in that** the side wall thickening extends along at least a part-height (h) of the side wall (3).

5. Anchor rail according to claim 4,
**characterised in that** the side wall thickening (59) extends along the entire height (H) of the side wall (3).

6. Anchor rail according to any of claims 1 to 5,
**characterised in that** at least one leg (4) has a leg thickening (69, 79) at least in the region close to the side wall (3) assigned to the leg (4), and **in that** the leg thickening (69, 79) extends across at least a part width (1) of the leg (4).

7. Anchor rail according to claim 6,
**characterised in that** the leg thickening (79) extends across the entire width (L) of the leg (4).

8. Anchor rail according to any of claims 1 to 7,
**characterised in that** the base body has several thickenings, and **in that** the thickness (vₛ, v_{b}) of all thickenings is the same.

9. Anchor rail according to any of claims 3 to 8,
**characterised in that** the base thickening (39) of the base (7) is thicker in the region of the arranged anchors (2) than in the region of the base (7) close to the side walls (3), and **in that** the thickness profile of the base (7) transverse to the longitudinal direction (200) of the anchor rail (1) corresponds at any point of the anchor rail (1) to the thickness profile of the base thickening (49) transverse to the longitudinal direction (200) of the anchor rail (1) in the region of the anchor (2).

10. Anchor rail according to any of claims 1 to 9,
**characterised in that** the wall thickness of at least one leg (24) increases from the associated side wall (3) of the anchor rail (1) towards the slot (5) of the anchor rail (1).

11. Anchor rail according to any of claims 1 to 10,
**characterised in that** the legs (4) of the anchor rail (1) and at least that part of the side walls (3) of the anchor rail (1) which adjoins the legs (4) are oriented orthogonally with respect to each other, and **in that** the surfaces of the legs (4) which are averted from the anchor (2) lie in the same plane.

12. Anchor rail according to any of claims 1 to 10,
**characterised in that** the surface of the free legs (4, 24) are located at the same level perpendicular to the side walls (3) in regions of the side walls (3) which are averted from the base (7).

13. Anchor rail according to any of claims 1 to 10,
**characterised in that** the insides of the legs (24, 34), which face the base (7), enclose with the side walls (3) an angle < 90°.

## Revendications

1. Rail d'ancrage pour l'ancrage dans le béton, avec une section transversale sensiblement en forme de C,
dans lequel le rail d'ancrage (1) comprend un corps de base (20) à section transversale sensiblement en forme de U, deux branches libres (4, 24, 34) et au moins un ancrage (2),
dans lequel le corps de base (20) comprend un fond (7) et deux parois latérales (3),
dans lequel les deux branches libres (4, 24, 34) sont disposées en face du fond (7) du corps de base, dans lequel le au moins un ancrage (2) est immobilisé sur un côté extérieur du fond (7),
dans lequel le côté extérieur du fond (7) est opposé aux branches libres (4, 24, 34) situées en face du fond (7), dans lequel entre les branches libres (4, 24, 34) est formée une fente (5) dans la direction longitudinale (200) du rail d'ancrage (1), dans lequel le rail d'ancrage (1) présente au moins un épaississement sur le corps de base (20),
dans lequel l'épaississement est disposé sur le fond (7) au moins dans la zone d'au moins un ancrage (2) et est formé comme un épaississement de fond (19, 29, 39), dans lequel les parois latérales (3) sont disposées perpendiculairement par rapport au fond (7),
dans lequel les parois latérales (3) forment avec le fond (7) des bords extérieurs, dans lequel les parois latérales (3) s'étendent parallèlement l'une à l'autre, **caractérisé en ce que** le fond (7) a une forme plane sur son côté extérieur, **en ce que** l'épaississement de fond (29) est disposé sur un côté intérieur du fond (7) opposé au côté extérieur du fond (7).

2. Rail d'ancrage selon la revendication 1,
**caractérisé en ce que** l'épaississement de fond (29, 39) s'étend sur toute l'extension longitudinale du fond (7), et **en ce que** l'épaississement de fond (29, 39), transversalement par rapport à la direction longitudinale (200) du rail d'ancrage (1), s'étend au moins sur une largeur partielle (b) du fond (7).

3. Rail d'ancrage selon la revendication 1 ou 2,
**caractérisé en ce que** l'épaississement de fond (39) s'étend sur toute la largeur (B) du fond (7).

4. Rail d'ancrage selon l'une des revendications 1 à 3,
**caractérisé en ce qu'**un épaississement est formé sur au moins une paroi latérale (3) au moins dans la zone proche de la branche libre (4, 24, 34) associée à la paroi latérale (3), sous la forme d'un épaississement de paroi latérale (49, 59), et **en ce que** l'épaississement de paroi latérale s'étend au moins sur une hauteur partielle (h) de la paroi latérale (3).

5. Rail d'ancrage selon la revendication 4,
**caractérisé en ce que** l'épaississement de paroi latérale (59) s'étend sur toute la hauteur (H) de la paroi latérale (3).

6. Rail d'ancrage selon l'une des revendications 1 à 5,
**caractérisé en ce qu'**au moins une branche (4) présente au moins dans la zone proche de la paroi latérale (3) associée à la branche (4) un épaississement de branche (69, 79), et **en ce que** l'épaississement de branche (69, 79) s'étend au moins sur une largeur partielle (1) de la branche (4).

7. Rail d'ancrage selon la revendication 6,
**caractérisé en ce que** l'épaississement de branche (79) s'étend sur toute la largeur (L) de la branche (4).

8. Rail d'ancrage selon l'une des revendications 1 à 7,
**caractérisé en ce que** le corps de base présente plusieurs épaississements, et **en ce que** l'épaisseur (vₛ, v_{b}) de tous les épaississements est la même.

9. Rail d'ancrage selon l'une des revendications 3 à 8,
**caractérisé en ce que** l'épaississement de fond (39) du fond (7) est plus épais dans la zone de l'ancrage disposé (2) que dans la zone du fond (7) proche des parois latérales (3), et **en ce que** le profil d'épaisseur du fond (7) transversalement par rapport à la direction longitudinale (200) du rail d'ancrage (1) correspond, à n'importe quel endroit du rail d'ancrage (1), au profil d'épaisseur de l'épaississement de fond (49) transversalement par rapport à la direction longitudinale (200) du rail d'ancrage (1) dans la zone de l'ancrage (2).

10. Rail d'ancrage selon l'une des revendications 1 à 9,
**caractérisé en ce que** l'épaisseur de paroi d'au moins une branche (24) augmente de la paroi latérale (3) du rail d'ancrage (1) qui lui est associée vers la fente (5) du rail d'ancrage (1).

11. Rail d'ancrage selon l'une des revendications 1 à 10,
**caractérisé en ce que** les branches (4) du rail d'ancrage (1) et au moins la partie des parois latérales (3) du rail d'ancrage (1) voisine des branches (4) sont orientées orthogonalement les unes par rapport à l'autre, et **en ce que** les surfaces des branches (4) opposées à l'ancrage (2) se trouvent dans le même plan.

12. Rail d'ancrage selon l'une des revendications 1 à 10,
**caractérisé en ce que** les surfaces des branches libres (4, 24) sont disposées à la même hauteur sur les zones des parois latérales (3) opposées au fond (7) perpendiculairement aux parois latérales (3).

13. Rail d'ancrage selon l'une des revendications 1 à 10,
**caractérisé en ce que** les côtés intérieurs des branches (24, 34) tournés vers le fond (7) définissent avec les parois latérales (3) un angle < 90°.
